# EUROPEAN PATENT APPLICATION

(11) **EP 4 848 600 A1**
(43) Date of publication of application: **02.12.2026**
(21) Application number: 26180433.0
(22) Date of filing: 21.05.2026
(51) Int. Cl.: H04B 5/26, H04B 5/43, H04B 5/48

(54) **NFC CIRCUIT**

(30) Priority: 27.05.2025 FR 2505727
(71) Applicant: STMicroelectronics International N.V., 1228 Plan-les-Ouates, Geneva (CH)
(72) Inventor: KWON, Jaesoon, 22009 INCHEON (KR); DECUGIS, Sebastien, MINATO-KU, TOKYO, 108-6017 (JP)
(74) Representative: Cabinet Beaumont

(57) **Abstract**

The present disclosure relates to an NFC circuit (204) comprising:
- a first terminal (108) adapted to be coupled to a first end (131) of a first antenna (112);
- a second terminal (113) adapted to be coupled to a second end (101) of the first antenna;
- a first switch (302) coupling the second terminal (113) to ground;
- a third terminal (116) adapted to be coupled to a first end (141) of a second antenna (114);
- a fourth terminal (115) adapted to be coupled to a second end (103) of the second antenna;
- a second switch (307) coupling the fourth terminal to ground; and
- a controller (110, 120) configured to control the first and second switches.

## Description

### Technical field

The present disclosure relates generally to near field communication (NFC) circuits.

### Background art

NFC circuits often comprise several adjacent antennas. These antennas can interfere between each other.

### Summary of Invention

There is a need to limit the coupling effect between adjacent NFC antennas in NFC circuits.

One embodiment addresses all or some of the drawbacks of known NFC circuits.

One embodiment provides an NFC circuit comprising:
- a first terminal adapted to be coupled to a first end of a first antenna;
- a second terminal adapted to be coupled to a second end of the first antenna;
- a first switch coupling the second terminal to ground;
- a third terminal adapted to be coupled to a first end of a second antenna;
- a fourth terminal adapted to be coupled to a second end of the second antenna;
- a second switch coupling the fourth terminal to ground; and
- a controller configured to control the first and second switches.

According to an embodiment, the NFC circuit comprises a first radiofrequency path, and a second radiofrequency path; the first terminal being adapted to be coupled to said first radiofrequency path, and the third terminal being adapted to be coupled to said second radiofrequency path.

According to an embodiment, the controller is configured to control the first and second switches according to a configuration set-up.

According to an embodiment, in a polling mode, the first and second switches are in opposite conduction states.

According to an embodiment:
- during an NFC transaction, the first switch is in a conductive state and the second switch is in a non-conductive state; and
- after said transaction has finished, the first switch is in a non-conductive state and the second switch is in a conductive state.

According to an embodiment, for low power detection of incoming NFC electromagnetic field, the first and second switches are in the same conduction state.

According to an embodiment, when the first switch is in a non-conductive state, the second terminal is in a floating state.

According to an embodiment, when the second switch is in a non-conductive state, the fourth terminal is in a floating state.

According to an embodiment, said first radiofrequency path and said second radiofrequency path are coupled to a matching circuit of the NFC circuit.

According to an embodiment, said configuration set-up is stored in one or several registers of the NFC circuit.

According to an embodiment, the controller comprises:
- a control unit coupled to an NFC controller; and
- a radiofrequency filter coupling the NFC controller to the matching circuit.

According to an embodiment, the second and fourth terminals are accessible from the outside of the NFC circuit.

One embodiment provides a method of operating the NFC circuit described above; the method comprising the controllable grounding of the second terminal and/or of the fourth terminal of the NFC circuit by using respectively the first and/or the second switches.

One embodiment provides a system comprising:
- an NFC circuit as described above;
- the first antenna; and
- the second antenna;
the first antenna having its first end coupled to the third terminal, and its second end coupled to the second terminal; the second antenna having its first end coupled to the fourth terminal and its second end coupled to the fourth terminal.

According to an embodiment, the first and second antennas are single ended antennas.

### Brief description of drawings

The foregoing features and advantages, as well as others, will be described in detail in the following description of specific embodiments given by way of illustration and not limitation with reference to the accompanying drawings, in which:
Figure 1 illustrates a system with an example of an NFC circuit;
Figure 2 illustrates a chronogram of operating of the NFC circuit of Figure 1;
Figure 3 illustrates a system comprising an NFC circuit according to an embodiment; and
Figure 4 illustrates a chronogram of operating of the NFC circuit of Figure 3.

### Description of embodiments

Like features have been designated by like references in the various figures. In particular, the structural and/or functional features that are common among the various embodiments may have the same references and may dispose identical structural, dimensional and material properties.

For the sake of clarity, only the operations and elements that are useful for an understanding of the embodiments described herein have been illustrated and described in detail.

Unless indicated otherwise, when reference is made to two elements connected together, this signifies a direct connection without any intermediate elements other than conductors, and when reference is made to two elements coupled together, this signifies that these two elements can be connected or they can be coupled via one or more other elements.

In the following disclosure, unless indicated otherwise, when reference is made to absolute positional qualifiers, such as the terms "front", "back", "top", "bottom", "left", "right", etc., or to relative positional qualifiers, such as the terms "above", "below", "higher", "lower", etc., or to qualifiers of orientation, such as "horizontal", "vertical", etc., reference is made to the orientation shown in the figures.

Unless specified otherwise, the expressions "around", "approximately", "substantially" and "in the order of" signify within 10 % or 10°, and preferably within 5 % or 5°.

Near field communication (NFC) systems use a radio frequency electromagnetic field generated by a device (e. g. end or reader) to communicate with another device (e. g. card, tag). One device can operate in reader mode by generating a field intended for another device and in a card emulation mode, also called tag emulation mode, by capturing a field generated by another device. NFC allows short distance communications (less than ten centimeters) between two devices.

In the present description, we consider the case of a system in which at least one of the devices is compatible with NFC technology according to the NFC Forum or ISO 14443A and B for example.

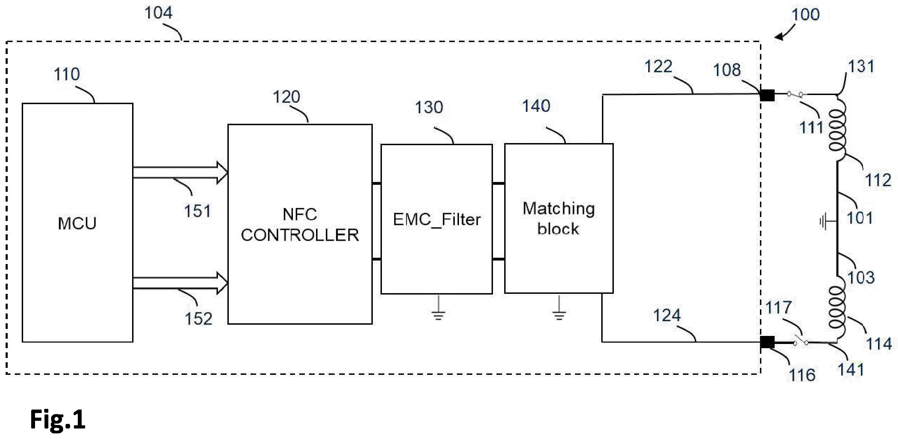

Figure 1 illustrates a system 100 comprising an example of an NFC circuit 104 which is for example comprised in a microcontroller or in a system on chip.

The NFC circuit 104 comprises a block 110 (MCU) whose function is to receive and process an NFC signal for standard NFC operations such as card or tag reading or charging modes operations for example. In an example, the block 110 is a computing unit or a microcontroller. The block 110 generates for example tasks and data that have to be transmitted or treats received data.

The block 110 is coupled to a block 120 (NFC CONTROLLER) wherein the NFC signal is conditioned for providing an NFC alternative 13.56 MHz signals 151, 152. In an example, blocks 110 and 120 are within a same block or circuit for example in a microcontroller.

In an example, the block 110 is of the STM32MCU^{®} series and the block 120 of the ST25R500^{®} series.

In an example, the block 120, is a reader integrated circuit (Reader IC), for example an integrated NFC initiator, or a high frequency reader integrated circuit. The block 120 for example generates the necessary physical, i.e. electrical, signal to transport the information signal through the air with magnetic field as medium. In an example, it includes an analog front end (AFE) and an integrated data framing system for example for norms ISO 18092 (NFCIP-1) initiator, ISO 18092 (NFCIP-1) active target, ISO 14443A and B reader (including high bit rates), ISO 15693 reader and FeliCa^{™} reader.

In an example, the block 120 contains a low power capacitive sensor that can be used to detect the presence of a card without switching on the reader field. The presence of a card can also be detected by performing a measurement of amplitude or phase of signal on an antenna LC tank, and comparing it to a stored reference. In an example, it also contains a low power RC oscillator and wake-up timer that can be used to wake up the system after a defined time period, and to check for the presence of a tag using one or more low power detection techniques (capacitive, phase or amplitude).

In the represented example, the block 120 is coupled to an electromagnetic compatibility filter 130 (EMC_Filter), also called EMI (Electromagnetic interference) filter, comprising inductances and capacitors.

The block 130 is for example coupled to a matching circuit 140 (Matching block).

In the represented example, the NFC circuit comprises a radiofrequency path or line 122 coupling the matching block 140 to a terminal 108 which is accessible from the outside of the circuit 104. The matching block is additionally coupled to a terminal 116, which is accessible from the outside of the circuit 104, via another radiofrequency path or line 124.

In an example, the matching block comprises a balloon circuit.

The blocks 110, 120, 130, 140 are for example referenced to ground.

In the represented example, an NFC antenna 112, external to the circuit 104, has one end 131 coupled to a switch 111. The switch 111 couples the end 131 of the antenna 112 to terminal 108. Antenna 112 is for example a single ended antenna and/or the other end 101 of antenna 112 is coupled, preferably connected, to ground.

In the example of Figure 1, an NFC antenna 114, external to the circuit 104, has one end 141 coupled to a switch 117. The switch 117 couples the end 141 of the antenna 114 to terminal 116. Antenna 114 is for example a single ended antenna and/or the other end 103 of antenna 114 is coupled, preferably connected, to ground.

In the represented example, the switches 111 and 117 are implemented outside the circuit 104. In an example the switches 111 and 117 are transistors which are implemented on a circuit which is external to the NFC circuit 104. The switches 111, 117 are for example controlled by another microcontroller.

In an example, antennas 112 and 114 are adjacent and/or in a vicinity of the millimeter range.

In an example, antennas 112 and 114, taken independently, have similar or equal resonant frequencies.

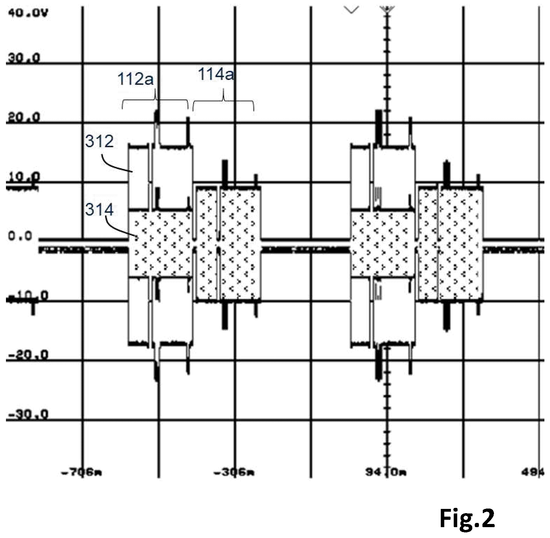

Figure 2 illustrates a chronogram of operating of the NFC circuit of Figure 1. More particularly, Figure 2 illustrates overlaid modulated signals, in volts, between the ends of the antenna 112 (signal without symbols 312) and of the antenna 114 (signal with symbols 314) in a polling sequence when an external NFC device (not illustrated), for example a phone comprising an NFC circuit, is for example in a near field distance and/or aligned over the antenna 112.

In the example of Figure 2, in a phase 112a, the switch 111 is in a conductive state and switch 117 is in a non-conductive state. In another phase 114a, which follows phase 112a, switch 111 is in a non-conductive state, or floating state, and switch 117 is in a conductive state. The phases 112a and 114a corresponds for example to a polling sequence.

In the example of Figure 2, in phase 112a, the signal 312 generated in antenna 112 is at a high level of around 15V. During this phase 112a, even if the external device is not in front of the antenna 114, the coupling between the antennas 112 and 114 creates an unwanted signal 314 in antenna 114 reaching a level of about 5V.

In phase 114a, the signal 312 in antenna 112 is low and the signal 314 in antenna 114 is at a level of about 10 V.

In the represented example, this sequence of phases 112a and 114a is repeated two times, but it can be repeated numerous times.

The coupling between antennas 112, 114, leading to the unwanted signal 314 at the ends of antenna 114 during phase 112a, could lead to a misunderstanding of the situation, or a false detection, since no signal is supposed to be detected at the ends of antenna 114 in this example during the phase 112a. In the field of automotive for example, this could lead to card protection, wireless charging or starting engine failures.

Even if the switches 111 and 117 are in an opposite conduction state, for example with switch 111 in a conductive state and the switch 117 in a non-conductive state, one can see that there is a coupling between the antennas 112 and 114 since the switches 111 and 117 are on radiofrequency paths, respectively 122 and 124.

A solution could be to increase the distance between the antennas 112, 114 but it cannot be used due to the limited space in NFC devices.

A different winding direction between the antennas could be adopted but the coupling reduction still needs to be improved.

Having different antennas resonant frequencies has a significant impact on diminishing the coupling but it also reduces at the same time the efficiency of the NFC signals reception.

Another drawback of the example of Figure 1 is that the switches 111, 117 have to be implemented (and controlled) outside the NFC circuit 104 which leads to additional manufacturing steps and additional costs.

In order to overcome these drawbacks, the embodiments provide an NFC circuit comprising:
- a first terminal adapted to be coupled to a first end of a first antenna;
- a second terminal adapted to be coupled to a second end of the first antenna;
- a first switch coupling the second terminal to ground;
- a third terminal adapted to be coupled to a first end of a second antenna;
- a fourth terminal adapted to be coupled to a second end of the second antenna;
- a second switch coupling the fourth terminal to ground; and
- a controller configured to control the first and second switches.

The embodiments provide an integrated solution where the terminals to serve as connections to the antennas are controllable by the NFC circuit to provide open loops.

The fact that the switches are provided internally in the NFC circuit allows a cost reduction and an easier implementation for a user which will not have to implement additional switches and controls outside the NFC circuit.

The fact that the switches are coupled to ground, instead of being coupled to radiofrequency paths as compared to Figure 1, increases the coupling reduction since it diminishes the resonance.

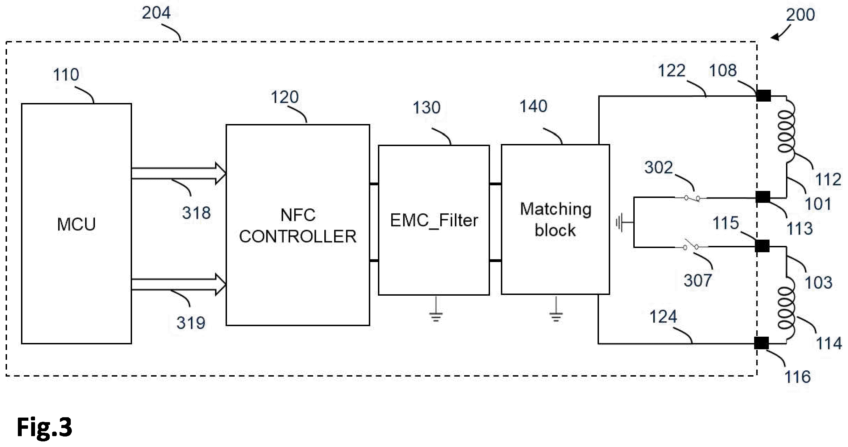

Figure 3 illustrates a system 200 comprising an NFC circuit 204 according to an embodiment.

In the represented example, the system 200 comprises an NFC circuit 204 which is similar to the NFC circuit 104 except that it comprises other terminals 113, 115 which are accessible from the outside of the circuit 104, and except that switches 111, 117 are not present.

The ends 101, 131 of antenna 112 are, in the Figure 3, coupled, preferably connected, respectively to the terminals 113 and 108, and the ends 103, 141 of antenna 114 are coupled, preferably connected, respectively to the terminals 115 and 116.

The NFC circuit also comprises, internally, a switch 302 and a switch 307 which couple respectively, terminal 113 to ground, and terminal 115 to ground. In an example, ground is implemented by a ground plane.

In an example, the switches 302 and 307 are transistors, for example field effect transistors, for example NMOS or PMOS transistors.

In an example, the NFC circuit 204 is formed or integrated in a substrate, for example a silicon substrate. The switches 302 and 307 can therefore be fully integrated in the substrate during the NFC circuit 204 manufacturing which leads to a cost reduction.

The switches 302 and 307 are for example controlled internally within the NFC circuit 204 by signals coming for example from the block 120 or from the block 110. In an example, the block 110 sends commands 318, 319, for example GPIO (general purpose input/output) commands, for the block 120 to control the conduction state of the switches 302, 307.

In an example, the commands from block 110 modify one or several registers, for example configurations registers which form a configuration set-up. The value of these registers leads to the control sequence of the switches 302, 307.

In an example, the block 120 or the block 110 control the switches 302, 307, for example via the configuration set-up, for the switches 302, 307 to be in opposite conduction states alternatively.

In an example, the block 120 or the block 110 control the switches 302, 307, for example via the configuration set-up, such that, during an NFC transaction, the switch 302 is in a conductive state and the switch 307 is in a non-conductive state; and after this transaction has finished, the switch 302 is in a non-conductive state and the switch 307 is in a conductive state. In this configuration, the antenna 114 has the end 103 in a floating state. This allows to create an open loop in the antenna 114 during a first transaction through the antenna 112. In a second transaction, after first transaction has finished, the conduction states of the switches 302, 307 are inversed and a transaction can go through the antenna 114 with an open loop in the antenna 112 to reduce coupling. In an example, switches 302, 307 are controlled to keep a respective conduction state for a respective period of time for example a period of time of 200ms or less.

In an example, the block 120 or the block 110 control the switches 302, 307, for example via the configuration set-up, such that, during a polling sequence, the switch 302 is in a conductive state and the switch 307 is in a non-conductive state, then the switch 302 is in a non-conductive state and the switch 307 is in a conductive state.

In an example, for low power detection of incoming NFC electromagnetic field, the block 120 or the block 110 control the switches 302, 307, for example via the configuration set-up, for the switches 302 and 307 to be in the same conduction state, for example in a conductive state. In this case, the detection can be enhanced since the signals of the two antennas 112 and 114 can be added.

The conduction state of the switches 302, 307 allows to create open loops (respective switch in an non-conductive state) or closed loops (respective switch in an conductive state) with the respective antennas. For example, when the switch 302 is in a conductive state, and when the antenna 112 is coupling the terminal 108 and the terminal 113, a closed loop is created between ground and the radiofrequency path 122. When the switch 307 is in a conductive state, and when the antenna 114 is coupling the terminal 115 and the terminal 116, a closed loop is created between ground and the radiofrequency path 124. When the switch 302 is in a non-conductive state, and when the antenna 112 is coupling the terminal 108 and the terminal 113, an open loop is created. When the switch 307 is in a non-conductive state, and when the antenna 114 is coupling the terminal 115 and the terminal 116, an open loop is created.

In an example, during a polling phase, the switches 302, 307 are controlled to be in opposite conduction states alternatively.

In an example, the switch 302 is directly connected to terminal 113, and for example, directly connected to ground.

In an example, the switch 307 is directly connected to terminal 115, and for example directly connected to ground.

In an example, switches 302, 307 are two different, i.e. distinct, switches, which be similar or identical, or different, or have similar or different shapes or properties.

In an example, switches 302, 307 are implemented outside of the matching circuit.

In an example, antennas 112, 114 are two different, i.e. distinct, antennas, which may be similar or identical, or different, or have similar or different shapes or properties.

In an example, terminal 108 is capable of being coupled, and/or is preferably directly connected, to the end 131 of the antenna 112.

In an example, the terminal 113 is capable of being coupled, and/or is preferably directly connected, to the end 101 of the antenna 112.

In an example, the terminal 115 is capable of being coupled, and/or is preferably directly connected, to the end 103 of the antenna 114.

In an example, the terminal 116 is capable of being coupled, and/or is preferably directly connected, to the end 141 of the antenna 114.

In an example, terminals 108, 113, 115, 116 are different, i.e. distinct, terminals, which may be similar or identical or different, or having similar or different shapes or properties.

In an example, the outside of the circuit 104 is for example materialized by an end, or a periphery, of a substrate within, or upon which, circuit 104 or 204 is implemented.

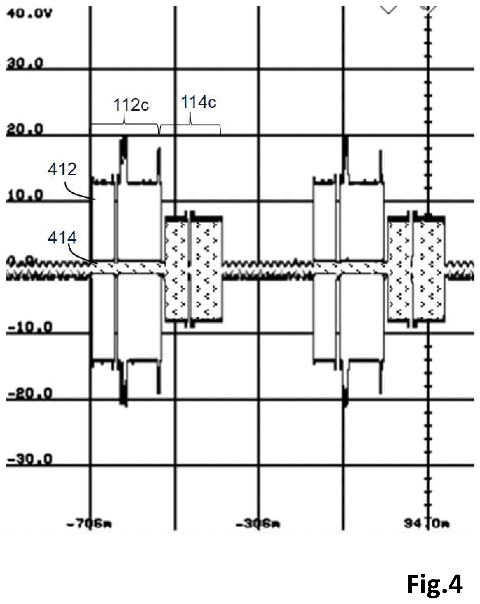

Figure 4 illustrates a chronogram of operating of the NFC circuit 204 of Figure 3.

More particularly, Figure 4 illustrates overlaid modulated signals, in volts, generated in antennas 112 (signal without symbols 412) and 114 (signal with symbols 414) in a polling sequence when an external NFC device, for example a phone comprising an NFC circuit, is for example in a near field distance and/or aligned over the antenna 112 and is not covering antenna 114.

In the example of Figure 4, in a phase 112c, the switch 302 is in a conductive state and switch 307 is in a non-conductive state. In another phase 114c, which follows phase 112c, switch 302 is in a non-conductive state, or floating state, and switch 307 is in a conductive state. The phases 112c and 114c corresponds for example to a polling sequence.

In the example of Figure 4, in a phase 112c, a signal 412 generated in antenna 112 is at a high level between about 12 and 20V because of a lower impedance. During this phase 112c, the coupling between the antennas 112 and 114 is this time very limited, as compared to phase 112a of Figure 2, and the unwanted signal 414 in antenna 114 remains at a noise level.

During phase 114c, the signal 412 in antenna 112 is low and the signal 414 in antenna 114 is at a level of about 8. The level of the signal 414 is lower than the level of signal 412 during phase 112c due to a higher impedance since the external NFC device is not in front of antenna 114 but in front of antenna 112.

In the represented example, this sequence of phases 112c and 114c is repeated two times, but it can be repeated numerous times.

In a different polling sequence, for example if the external NFC device is placed in front of antenna 114 instead of antenna 112, the switches 304 and 307 can be controlled to adopt respectively a non-conduction state and a conduction state.

The example of Figure 4 shows that the example of Figure 3 leads to a reduction of the coupling between adjacent antennas as compared to the example of Figure 1.

Various embodiments and variants have been described. Those skilled in the art will understand that certain features of these embodiments can be combined and other variants will readily occur to those skilled in the art. Particularly, even if the example of Figure 3 illustrates two antennas and two switches, other switches could be incorporated on the radiofrequency paths 122, 124 in order to diminish even more the coupling. The person of the art would use its knowledge to implement a higher number of antennas, i.e. three or more, by adding, for each additional antenna, at least one switch coupling an end of the additional antenna to ground in a similar manner as for switches 302 or 307.

Finally, the practical implementation of the embodiments and variants described herein is within the capabilities of those skilled in the art based on the functional description provided hereinabove. In particular, concerning the matching block, a different matching block 140 and/or a different block 130 can be implemented for each antenna.

The voltage range shown in Figure 4 can vary depending on the devices and antennas used and can go from few hundreds of mV to tenth of Volts.

The different embodiments can be applied in the automotive field but also in any application field wherein NFC may be needed such as portable electronics, banking, identification, transportation, or battery charging for example.

## Claims

1. NFC circuit (204) comprising:
- a first terminal (108) adapted to be coupled to a first end (131) of a first antenna (112);
- a second terminal (113) adapted to be coupled to a second end (101) of the first antenna;
- a first switch (302) coupling the second terminal (113) to ground;
- a third terminal (116) adapted to be coupled to a first end (141) of a second antenna (114);
- a fourth terminal (115) adapted to be coupled to a second end (103) of the second antenna;
- a second switch (307) coupling the fourth terminal to ground; and
- a controller (110, 120) configured to control the first and second switches.

2. The NFC circuit according to claim 1, wherein the NFC circuit (204) comprises a first radiofrequency path (122), and a second radiofrequency path (124);
the first terminal (108) being adapted to be coupled to said first radiofrequency path (122), and the third terminal (116) being adapted to be coupled to said second radiofrequency path (124).

3. The NFC circuit according to claim 1 or 2, wherein the controller (110, 120) is configured to control the first and second switches (302, 307) according to a configuration set-up.

4. The NFC circuit according to anyone of claims 1 to 3, wherein, in a polling mode, the first and second switches (302, 307) are in opposite conduction states.

5. The NFC circuit according to anyone of claims 1 to 4, wherein:
- during an NFC transaction, the first switch (302) is in a conductive state and the second switch (307) is in a non-conductive state; and
- after said transaction has finished, the first switch is in a non-conductive state and the second switch is in a conductive state.

6. The NFC circuit according to anyone of claims 1 to 5, wherein, for low power detection of incoming NFC electromagnetic field, the first and second switches are in the same conduction state.

7. The NFC circuit according to anyone of claims 1 to 6, wherein, when the first switch (302) is in a non-conductive state, the second terminal (113) is in a floating state.

8. The NFC circuit according to anyone of claims 1 to 7, wherein, when the second switch (307) is in a non-conductive state, the fourth terminal (115) is in a floating state.

9. The NFC circuit according to anyone of claims 2, or 3 to 8 in their dependency to claim 2, wherein said first radiofrequency path and said second radiofrequency path are coupled to a matching circuit (140) of the NFC circuit (204).

10. The NFC circuit according to anyone of claims 3, or 4 to 9 in their dependency to claim 3, wherein said configuration set-up is stored in one or several registers of the NFC circuit (204).

11. The NFC circuit according to anyone of claims 8, or 9 to 10 in their dependency to claim 8, wherein the controller (110, 120) comprises:
- a control unit (110) coupled to an NFC controller (120); and
- a radiofrequency filter (130) coupling the NFC controller to the matching circuit (140).

12. The NFC circuit according to anyone of claims 1 to 11, wherein the second and fourth terminals (113, 115) are accessible from the outside of the NFC circuit (204).

13. Method of operating the NFC circuit (204) according to anyone of claims 1 to 12; the method comprising the controllable grounding of the second terminal (113) and/or of the fourth terminal (116) of the NFC circuit (204) by using respectively the first and/or the second switches (302, 307) .

14. System (200) comprising:
- an NFC circuit (204) according to anyone of claims 1 to 12;
- the first antenna (112); and
- the second antenna (114);
the first antenna having its first end (131) coupled to the third terminal (108), and its second end (101) coupled to the second terminal (113);
the second antenna having its first end (141) coupled to the fourth terminal (116) and its second end (103) coupled to the fourth terminal (115).

15. The system according to claim 14, wherein first and second antennas (112, 114) are single ended antennas.
